Europäisches Patentamt

European Patent Office

Office européen des brevets

(19)

(11) Veröffentlichungsnummer: **0 356 794**
**A2**

(12) **EUROPÄISCHE PATENTANMELDUNG**

(21) Anmeldenummer: **89114920.5**

(22) Anmeldetag: **11.08.89**

(51) Int. Cl.⁵: **G06F 15/64**

(30) Priorität: **29.08.88 DE 3829261**

(43) Veröffentlichungstag der Anmeldung:
    **07.03.90 Patentblatt 90/10**

(84) Benannte Vertragsstaaten:
    **AT DE ES FR GB IT NL SE**

(71) Anmelder: **Siemens Aktiengesellschaft**
    **Wittelsbacherplatz 2**
    **D-8000 München 2(DE)**

(72) Erfinder: **Kern, Günter, Dipl.-Ing.**
    **Spöcker Strasse 2**
    **D-7500 Karlsruhe 31(DE)**

(54) Verfahren zur Abfrage der Daten eines Bildspeichers einer Datenverarbeitungsanlage.

(57) Bei einer Datenverarbeitungsanlage mit einem Bildspeicher (BS), dessen Speicherplätze jeweils die doppelte Anzahl der von der Verarbeitungseinheit (P) abfragbaren Binärstellen aufweist, können in einfacher Weise beliebige Speicherinhalte ab einer beliebigen Binärstelle abgefragt werden. Die Verarbeitungseinheit (P) adressiert dazu mittels einer Pixeladresse (M + N) über ein Adressregister (AR) und eine Adressteuerung (AS), sowie über die Adressleitungen (AL, AH) den Bildspeicher (BS). Das am Ausgang des Bildspeichers (BS) erscheinende Datenwort wird in einem Barrelshifter (B) entsprechend einer Pixelnummer (N), die Bestandteil der Pixeladresse (M + N) ist, solange rotiert, bis die der Pixelnummer (N) entsprechende Binärstelle an erster Stelle des Datenwortes steht. Da der Datenbus (DB) sowie die Verarbeitungseinheit (P) nur das halbe Datenwort des Bildspeichers (BS) aufnehmen können, wird vom Barrelshifter (B) nur die erste Hälfte des rotierten Datenwortes an den Datenbus (DB) gelegt.

FIG 1

EP 0 356 794 A2

## Verfahren zur Abfrage der Daten eines Bildspeichers einer Datenverarbeitungsanlage

Die Erfindung bezieht sich auf ein Verfahren zur Abfrage der Daten eines Bildspeichers einer Datenverarbeitungsanlage, die über einen X-Bit breiten Datenbus verfügt, wobei der Bildspeicher über eine Pixeladresse adressierbar ist, die aus einer Wortadresse zur Adressierung eines Datenwortes eines jeweiligen Speicherplatzes des Bildspeichers, sowie aus einer Pixelnummer zur Adressierung einer bestimmten Binärstelle des Datenwortes besteht.

In der deutschen Patentanmeldung mit dem amtlichen Aktenzeichen P 38 03 061.6 ist ein Verfahren zum Eintrag von Zeichen in einen Bildspeicher einer Datenverarbeitungsanlage vorgeschlagen, bei der der Bildspeicher aus zwei gleichen, getrennt adressierbaren Speicherhälften besteht und bitweise adressierbar ist. Für den Zeicheneintrag wird dabei eine Pixeladresse, die aus einer Wortadresse und aus einer Pixelnummer besteht, über ein Adressregister vorgegeben. Eine Adressteuerung adressiert dann jeweils zwei nebeneinanderliegende Speicherplätze der beiden Speicherhälften des Bildspeichers. Entsprechend der vorgegebenen Pixelnummer wird dann die einzutragende Zeichenzeile mittels eines Barrelshifters rotiert und an die Dateneingänge beider Speicherhälften des Bildspeichers gelegt. Ein Schreibmaskendecoder erzeugt aus der Pixelnummer und der vorgegebenen Schreibbreite eine 2X-Bit breite Schreibmaske, anhand der eine Schreibsteuerung die entsprechenden Binärstellen innerhalb der adressierten Speicherplätze des Bildspeichers zur Aufnahme der anliegenden Datenbits frei gibt.

Der Inhalt des Bildspeichers wird dabei fortlaufend zyklisch ausgelesen und auf einem Grafiksichtgerät oder einem Daten sichtgerät dargestellt. Dabei entspricht jedes im Bildspeicher abgelegte Bit (Binärsignal) einem Bildpunkt (Pixel) des Grafik- bzw. bes Datensichtgerätes, d.h. der Bildspeicher kann als ein direktes Abbild des Bildschirminhaltes des Grafiksichtgerätes aufgefaßt werden. Für die Darstellung auf dem Grafik- bzw. Datensichtgerät reicht es also aus, lediglich die Daten, die von einer Verarbeitungseinheit berechnet oder von einer Tastatur abgefragt sein können, in den Bildspeicher einzuschreiben.

Es gibt aber auch Anwendungsfälle, bei denen der Inhalt des Bildspeichers ganz oder teilweise von der Verarbeitungseinheit einer Datenverarbeitungsanlage, die beispielsweise ein Mikroprozessor sein kann, abgefragt und weiter verarbeitet werden soll.

Aufgabe der Erfindung ist es, das Auslesen definierter Speicherinhalte eines aus zwei Speicherhälften bestehenden Bildspeichers durch die Verarbeitungseinheit einer Datenverarbeitungsanlage zu ermöglichen.

Gemäß der Erfindung wird diese Aufgabe mittels eines Verfahrens der eingangs genannten Art dadurch gelöst, daß

a) der Bildspeicher aus zwei getrennt adressierbaren, jeweils X-Bit breiten Speicherhälften, mit jeweils einer vorgebbaren Anzahl von Speicherplätzen besteht,

b) durch die jeweilige Wortadresse gleichzeitig jeweils nebeneinanderliegenende Speicherplätze beider Speicherhälften des Bildspeichers adressierbar sind, wobei die Wortadresse einer Speicherhälfte inkrementierbar ist,

c) das am Ausgang des Bildspeichers vorliegende 2X-Bit breite Datenwort entsprechend der Pixelnummer rotiert wird und X-Bit aus dem 2X-Bit breiten Datenwort an den Datenbus gelegt werden.

Eine Ausbildung der Erfindung ist dadurch gekennzeichnet, daß lediglich eine vorgebbare Anzahl von Binärstellen aus dem X-Bit breiten Datenwort als Information des Bildspeichers an den Datenbus gelegt wird und die restlichen Binärstellen vorgebbare Werte annehmen. Diese Option ist für alle Fälle vorgesehen, bei denen es notwendig ist, daß die Verarbeitungseinheit nur vorbestimmte Binärstellen weiterverarbeiten soll.

Ein Ausführungsbeispiel der Erfindung ist in der Zeichnung dargestellt und wird im folgenden näher erläutert. Dabei zeigen:

FIG 1 und FIG 7 das Blockschaltbild einer Datenverarbeitungsanlage,

FIG 2 eine schematische Darstellung eines Bildspeichers,

FIG 3 einen Ausschnitt aus dem Bildspeicher,

FIG 4 bis FIG 6 die Bitkombination eines Bildspeicherinhaltes.

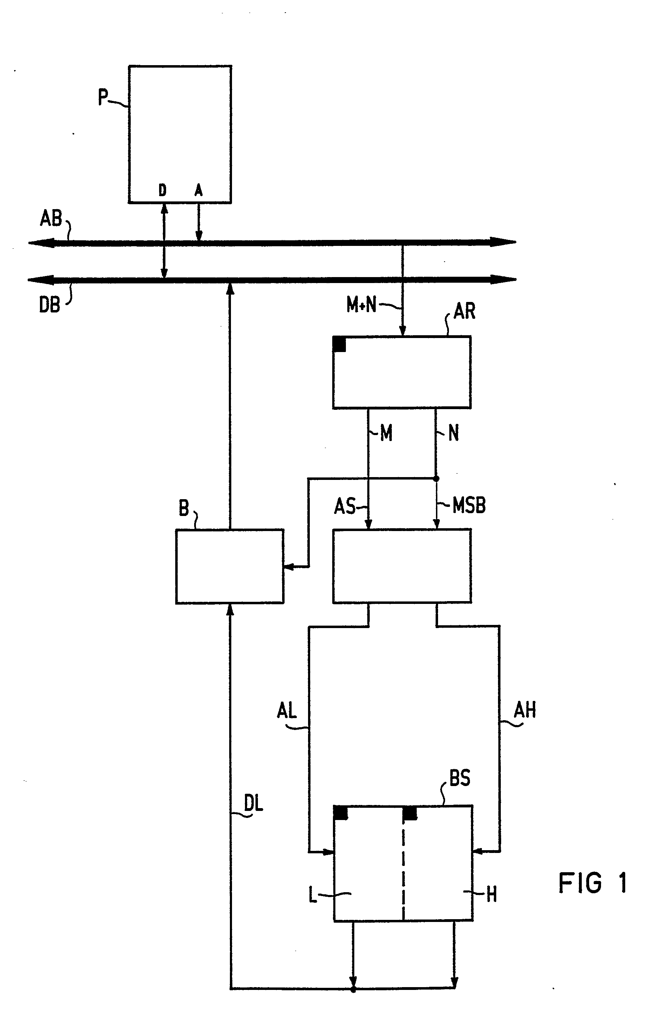

Die Darstellung gemäß FIG 1 zeigt ein Blockschaltbild einer Datenverarbeitungsanlage, wie sie zur Durchführung des Verfahrens geeignet ist. Sie besteht aus einem Prozessor P, der beispielsweise ein Mikroprozessor oder ein beliebiger spezieller Grafikprozessor sein kann, einem Adressregister AR, einem Barrelshifter B, einer Adressteuerung AS, sowie einem Bildspeicher BS, der in zwei Speicherhälften L (Low) und H (High) geteilt ist. Alle Speicherelemente sind durch ein schwarzes Quadrat in der linken oberen Ecke gekennzeichnet.

Der Prozessor P ist über seine Datenleitungen D mit einem Datenbus DB und über seine Adressleitungen A mit einem Adressbus AB verbunden. Der Adressbus AB sowie der Datenbus DB sind durch eine jeweils dick ausgezogene Linie dargestellt. Die Verbindung der anderen obengenannten Einrichtungen untereinander so wie mit dem Adress- AB bzw. den Datenbus DB erfolgt ebenfalls durch Busleitungen, die durch dünnere Linien als der Adressbus AB bzw. der Datenbus DB dargestellt sind.

Der Bildspeicher BS kann aus zwei herkömmlichen Speicherbausteinen zusammengesetzt sein. Jeder der Speicherbausteine ver fügt dabei über eine Wortbreite, deren Anzahl an Binärstellen der Anzahl der über den Datenbus DB abfragbaren Binärstellen entspricht, so daß der gesamte Bildspeicher die doppelte, vom Prozessor abfragbare Wortbreite aufweist. Angenommen der Prozessor P sei ein 8-Bit-Prozessor, dann weist ein Speicherplatz des Bildspeichers der aus Low- und High-Speicherhälfte besteht, insgesamt 16 Binärstellen auf.

Für das Auslesen eines Speicherplatzes aus dem Bildspeicher BS wird vom Prozessor P über die Adressleitungen A und den Adreßbus AB eine Pixeladresse M + N an das Adressregister AR angelegt. Diese Pixeladresse M + N besteht aus einer Wortadresse M und einer Pixelnummer N. Über das Adressregister AR wird die Wortadresse M an die Adressteuerung AS und die Pixelnummer N an den Barrelshifter B weitergeleitet. Das höchstwertige Bit MSB (most significant bit) der Pixelnummer N gelangt ebenfalls an die Adressteuerung AS. Abhängig von der Wortadresse M und dem höchstwertigen Bit MSB der Pixelnummer N übernimmt die Adreßsteuerung AS die Adressierung der beiden Speicherhälften L, H des Bildspeichers BS über die Adressbusse AL und AH. Zum besseren Verständnis der Adressierung des Bildspeichers BS sei zunächst auf die Pixelnummer N näher eingegangen.

Es wurde bereits erwähnt, daß für einen 8-Bit-Prozessor der Bildspeicher BS eine gesamte Breite von 16 Bit pro Speicherplatz aufweist. Da die Adressierung des Bildspeichers nicht nur auf einen einzelnen Speicherplatz beschränkt ist, sondern auch eine bestimmte Binärstelle innerhalb eines jeweiligen Speicherplatzes adressiert werden kann, muß die Pixelnummer N als Bestandteil der gesamten Pixeladresse M + N so beschaffen sein, daß sie in der dezimalen Darstellung den Wertebereich von 0 bis 15 umfaßt. Dies entspricht in hexadezimaler Darstellung dem Wertebereich von 0 bis F. Um diese Werte binär darstellen zu können, sind insgesamt vier Bit erforderlich. Die folgende Tabelle zeigt eine Gegenüberstellung der entsprechenden Zahlen in den verschiedenen Zahlenbereichen.

| Dezimal | Hexadezimal | Binär |
|---|---|---|
|  |  | MSB |
| 0 | 0 | 0000 |
| 1 | 1 | 0001 |
| 2 | 2 | 0010 |
| 3 | 3 | 0011 |
| 4 | 4 | 0100 |
| 5 | 5 | 0101 |
| 6 | 6 | 0110 |
| 7 | 7 | 0111 |
| 8 | 8 | 1000 |
| 9 | 9 | 1001 |
| 10 | A | 1010 |
| 11 | B | 1011 |
| 12 | C | 1100 |
| 13 | D | 1101 |
| 14 | E | 1110 |
| 15 | F | 1111 |

Aus der Tabelle ist ersichtlich, daß das höchstwertige Bit MSB der Binärdarstellung für die ersten acht Bit den Wert 0 aufweist und für die weiteren acht Bit, die dezimal den Zahlen 8 bis 15, bzw. hexadezimal den Zahlen 8 bis F entsprechen, den Wert 1 annimmt. Dieser Sachverhalt wird für die Adressierung der Speicherplätze des Bildspeichers BS über die Adressteuerung AS ausgenützt.

Ist die Pixelnummer M + N kleiner als 8 hexadezimal, so wird die Wortadresse M von der Adressteuerung AS unverändert über die Adressleitungen AL und AH an den Bildspeicher BS gelegt. Damit wird der gleiche Speicherplatz der L-Hälfte und der gleiche Speicherplatz der H-Hälfte adressiert. Wenn die Pixelnummer jedoch Werte größer gleich 8 annimmt, so bewirkt der Wert 1 des höchstwertigen Bits MSB der Pixelnummer, daß in der Adreßsteuerung AS die Adresse AL inkrementiert wird und der nächsthöhere Speicherplatz der Speicherhälfte L des Bildspeichers adressiert wird. Die Adresse für die Speicherhälfte H des Bildspeichers BS bleibt dabei unverändert.

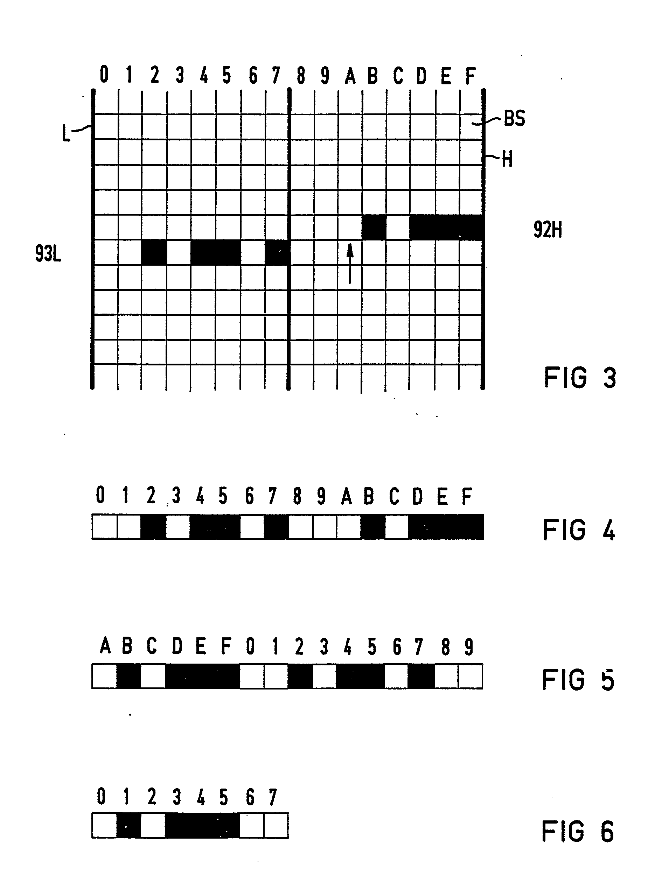

Das 16-Bit breite Speicherwort gelangt über die Ausgänge des Bildspeichers BS und über den ebenfalls 16-Bit breiten Datenbus DL an den Eingang des Barrelshifters B. Der Barrelshifter ist eine Einrichtung zum Rotieren der Bitinformation eines Datenwortes. Mit "Rotieren" ist dabei gemeint, daß die Bitinformation einer Zeichenzeile in Abhängigkeit von der Pixelnummer N nach links verschoben wird, wobei das jeweils an der ersten Binärstelle befindliche Bit an die letzte Binärstelle des Datenwortes gelangt. Auf die Wirkungsweise des Barrelshifters wird im Zusammenhang mit den FIG 3 bis 5 noch näher eingegangen. Nach dem das Datenwort aus dem Bildspeicher BS im Barrelshifter B in Abhängigkeit von der Pixelnummer N rotiert wurde, werden die ersten acht Bit des Datenwortes an den Datenbus DB gelegt und können so vom Prozessor P abgefragt werden.

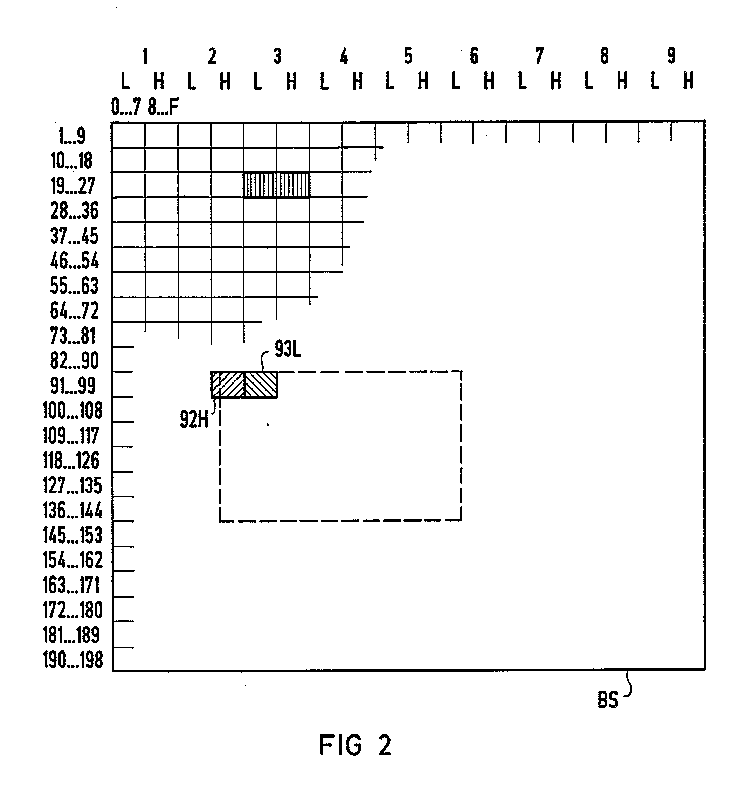

In FIG 2 ist der Bildspeicher BS als direktes Abbild eines Datensichtgerätes, beispielsweise eines LCD-Sichtgerätes dargestellt. Von den insgesamt 198 Speicherplätzen des Bildspeichers BS ergeben jeweils neun Speicherplätze eine Displayzeile. Weist man jedem auf dem Display darstellbaren Bildpunkt (Pixel) eine Binärstelle eines Speicherplatzes zu, so besteht eine Displayzeile(= Bildzeile) aus 9 x 16 Bildpunkten. Die einzelnen Speicherplätze sind wieder durch ihre L- und H-Hälften gekennzeichnet, deren Binärstellen von 0...7 und von 8...F gekennzeichnet sind. Am Beispiel des Speicherplatzes 21 sind die 16 Binärstellen, die jeweils einem Bildpunkt entsprechen sollen, eingezeichnet. Der gesamte Bildspeicher und damit das Display kann eine beliebige Information, beispielsweise Grafik oder Text usw., enthalten.

Aus dem Inhalt des Bildspeichers bzw. des Displays soll ein Block der Displayinformation zur beliebigen weiteren Verarbei tung durch den Prozessor ausgelesen werden. Dieser Block ist in FIG 2 gestrichelt dargestellt. Der Prozessor P, der jeweils nur acht Bit verarbeiten kann, muß dazu Speicherplatz für Speicherplatz jeweils die L-Speicherhälfte als auch H-Speicherhälfte auslesen. Im dargestellten Fall muß er zunächst mit dem Speicherplatz 92H beginnen. Die Adressensteuerung wird also, wie oben beschrieben, bei vorgegebener Wortadresse M und Pixelnummer N zunächst den Speicherplatz 92H und - weil das höchstwertige Bit MSB den Wert 1 aufweist den Speicherplatz 93L adressieren. Dabei ist ersichtlich, daß die ersten beiden Bit des Speicherplatzes 92H nicht benötigt werden.

Die FIG 3 zeigt eine symbolische Darstellung eines Bildspeichers BS, der durch quadratische Kästchen, die von stark ausgezogenen Linien begrenzt sind, dargestellt ist. Jedes der Kästchen steht dabei sellvertretend für ein Bit (Binärsignal), wobei jeweils acht nebeneinanderliegende Bits ein Datenwort ergeben. Der Bildspeicher BS ist wieder in Low- und High-Speicherhälfte L, H eingeteilt, wobei jede Speicherhälfte acht Binärstellen aufweist. Die in FIG 2 lediglich schraffiert dargestellten Speicherplatzhälften 92H und 93L sind hier in FIG 3 durch weiße bzw. durch schwarze Kästchen dargestellt, die die jeweilige Information einer Binärstelle, also entweder ein Signal logisch Null oder logisch Eins, symbolisieren.

Um den Speicherplatz 92H auszulesen, gibt der Prozessor P, wie oben bereits beschrieben, eine Pixeladresse, die aus der Wortadresse M und der Pixelnummer N besteht, über seine Adressleitungen und den Adressbus AB vor. In diesem Fall hat die Wortadresse M den Wert 92 dezimal und die Pixelnummer den Wert A hexadezimal, was bedeutet, daß der Prozessor P die Bitinformation des Speicherplatzes 92H ab dem A-ten Bit (mit einem Pfeil gekennzeichnet) auf seinem Datenbus DB vorfinden möchte. Da die Pixelnummer N größer gleich 8 ist, nimmt das höchstwertige Bit MSB den Wert 1 an, so daß über die Adresssteuerung der Speicherplatz 92H und der Speicherplatz 93L des Bildspeichers BS adressiert wird.

In FIG 4 ist die am Ausgang des Bildspeichers BS und damit am Eingang des Barrelshifters B erscheinende Bitinformation (vergleiche FIG 1) zusammenhängend dargestellt. Über die Pixelnummer N, die vom Adressregister AR direkt an den Barrelshifter B (FIG 1) gelangt, erhält letzterer die Information, das an seinem Eingang anliegende Datenwort solange nach links zu rotieren, bis die Binärstelle mit dem Wert A hexadezimal an die erste Stelle des Datenwortes gelangt. Das Ergebnis dieser Rotation ist in FIG 5 dargestellt, wobei zum besseren Verständnis die Numerierung des ursprünglichen Datenwortes (FIG 4) beibehalten wurde. Da der Prozessor P jedoch nur ein 8-Bit breites Binärwort aufnehmen kann, werden an den Ausgang des Barrelshifters B, nur die ersten acht, in FIG 6 von 0...7 numerierten Bit des insgesamt 16

4

Bit breiten Datenwortes von FIG 5, gelegt.

Wie in FIG 2 ersichtlich, sind aus der Information des Speicherplatzes 92H nur die Binärstellen A bis F, also insgesamt sechs Bit, von Interesse. Wegen der im Barrelshifter B durchgeführten Rotation gelangen jedoch außer den sechs Bit der Speicherplatzhälfte 92H noch die ersten zwei Binärstellen, daß sind die Binärstellen 6 und 7 in FIG 6 der Speicherplatzhälfte 93L. Im Zusammenhang mit FIG 2 ist jedoch ersichtlich, daß die Information der Speicherplatzhälfte 93L sowie der nachfolgenden fünf Speicherplatzhälften in ihrer Gesamtheit eingelesen werden können, so daß es von Vorteil wäre, wenn der Prozessor nur die ersten sechs Bits des Speicherplatzes 92H zur Verfügung gestellt bekäme.

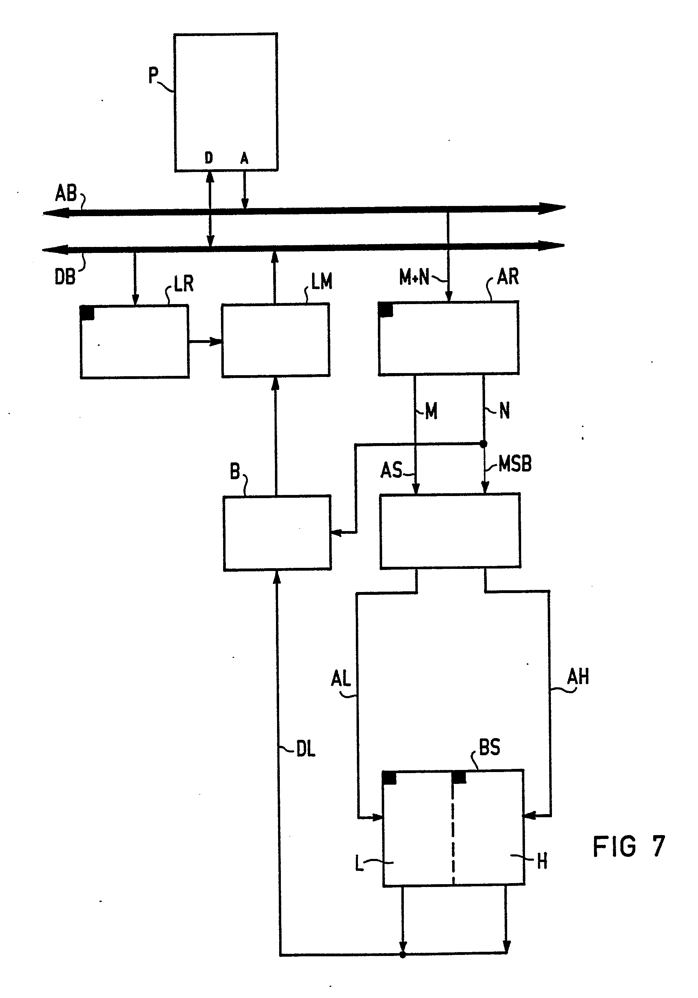

Dies läßt sich über eine in FIG 7 dargestellte Ausführungsform der Erfindung erreichen.

Das Blockschaltbild gemäß FIG 7 weist zusätzlich zu den in FIG 1 dargestellten Blöcken eine Lesemaske LM zwischen Barrelshifter B und Datenbus DB sowie ein Lesebreitenregister LR auf. Das Lesebreitenregister LR ist mit seinem Eingang mit dem Datenbus DB verbunden. Der Ausgang des Lesebreitenregisters LR liegt am Eingang der Lesemaske LM. Will der Prozessor, wie oben erwähnt, nur sechs Bit aus den insgesamt acht Bit, die am Ausgang des Barrelshifters B anliegen, einlesen, so kann er über das Lesebreitenregister LR eine Lesebreite von 6-Bit vorgeben. Die Lesemaske LM wird dann über den Ausgang des Lesebreitenregisters LR so gesteuert, daß nur die ersten vom Barrelshifter B kommenden sechs Bit an den Datenbus DB weitergeleitet werden, und die restlichen zwei Bit beliebige, fest vorgebbare Binärwerte annehmen.

## Ansprüche

1. Verfahren zur Abfrage der Daten eines Bildspeichers einer Datenverarbeitungsanlage, die über einen X-Bit breiten Datenbus verfügt, wobei der Bildspeicher über eine Pixeladresse adressierbar ist, die aus einer Wortadresse zur Adressierung eines Datenwortes eines jeweiligen Speicherplatzes des Bildspeichers, sowie aus einer Pixelnummer zur Adressierung einer bestimmten Binärstelle des Datenwortes besteht, **dadurch gekennzeichnet, daß**

a) der Bildspeicher (BS) aus zwei getrennt adressierbaren, jeweils X-Bit breiten Speicherhälften, (L,H) mit jeweils einer vorgebbaren Anzahl von Speicherplätzen (1...198) besteht,

b) durch die jeweilige Wortadresse (M) gleichzeitig jeweils nebeneinanderliegende Speicherplätze (1...198) beider Speicherhälften (L,H) des Bildspeichers (BS) adressierbar sind, wobei die Wortadresse (M) einer Speicherhälfte (L,H) inkrementierbar ist,

c) das am Ausgang des Bildspeichers (BS) vorliegende 2X-Bit breite Datenwort entsprechend der Pixelnummer (N) rotiert wird und X-Bit aus dem 2X-Bit breiten Datenwort an den Datenbus (DB) gelegt werden.

2. Verfahren nach Anspruch 1, **dadurch gekennzeichnet, daß** lediglich eine vorgebbare Anzahl von Binärstellen (0...7) aus dem X-Bit breiten Datenwort als Information des Bildspeichers an den Datenbus gelegt wird und die restlichen Binärstellen vorgebbare Werte annehmen.

P 4454

FIG 1

I P 4454

FIG 2

B P 4454

FIG 3

93L    92H

FIG 4

FIG 5

FIG 6

P 4454

FIG 7